# EUROPEAN PATENT SPECIFICATION

(11) **EP 0 500 719 B1**
(45) Date of publication and mention of the grant of the patent: **08.03.1995**
(21) Application number: 90917235.5
(22) Date of filing: 15.11.1990
(51) Int. Cl.: F25B 29/00, F25B 23/00, F24J 1/00, C09K 5/00

(54) **CONTINUOUS CHEMICAL HEAT PUMP SYSTEM FOR PRODUCING HEAT/OR COLD**
UNUNTERBROCHEN ARBEITENDE CHEMISCHE WÄRMEPUMPENANLAGE ZUR ERZEUGUNG VON WÄRME ODER KÄLTE
SYSTEME A THERMOPOMPE CHIMIQUE CONTINUE SERVANT A PRODUIRE DE LA CHALEUR OU DU FROID

(30) Priority: 15.11.1989 US 436913
(43) Date of publication of application: 02.09.1992
(73) Proprietor: SCHUURMAN, Eiko Albertus, NL-3402 DL IJSSELSTEIN (NL)
(72) Inventor: SCHUURMAN, Eiko Albertus, NL-3402 DL IJSSELSTEIN (NL)
(74) Representative: Mommaerts, Johan Hendrik, Dipl.-Phys.
(86) International application number: PCT/NL90/00171
(87) International publication number: WO 91/07628

(56) References cited:
- DE-A- 2 359 056
- DE-A- 3 104 821
- FR-A- 2 514 114
- FR-A- 2 539 855
- GB-A- 2 079 426
- US-A- 3 370 420
- US-A- 3 478 528
- US-A- 3 869 872
- US-A- 3 967 676
- US-A- 4 044 821
- US-A- 4 495 985
- US-A- 4 593 881

## Description

The invention relates to a closed chemical heat pump system as summarised in the preamble of claim 1.

A system of this kind is known from DE-A 2 359 056 (1973), in which a compression pump and an expansion pump are used, but means for controlling these pumps in order to obtain optimum operation and temperature conditions are not disclosed therein.

It is an object of the invention to provide a system of this kind, using essentially reversible chemical reactions, which can be operated in a simple and economic manner with a high coefficient of performance in very attractive temperature ranges and levels, meeting the requirements concerning temperature requirements of the lower-grade and higher-grade heat sources. Moreover no objectionable chlorofluoro hydrocarbons but environmentally acceptable and cheap bulk materials are used therein.

The system of the invention is characterised by the features of the characterising part of claim 1.

From FR-A 2 539 855 (1983) a cooling system is known, in which a controllable expansion valve is used, which is actuated in function of temperatures measured in various points of the system by means of temperature sensors. This system uses a chloro-fluoro hydrocarbon which is liquified by compression and cooling and is vaporised by expansion.

Favourable features are mentioned in claims 2 to 6.

### Brief description of the drawings:

Fig. 1 is the fundamental diagram, explaining the working principles of the chemical heat pump system, showing the maximum attainable temperature difference in one step (90 °C), at a 5 % small chemical reaction band.

Fig. 1a is the same fundamental diagram showing a temperature difference in one step of 70 °C at a 18 % chemical reaction band.

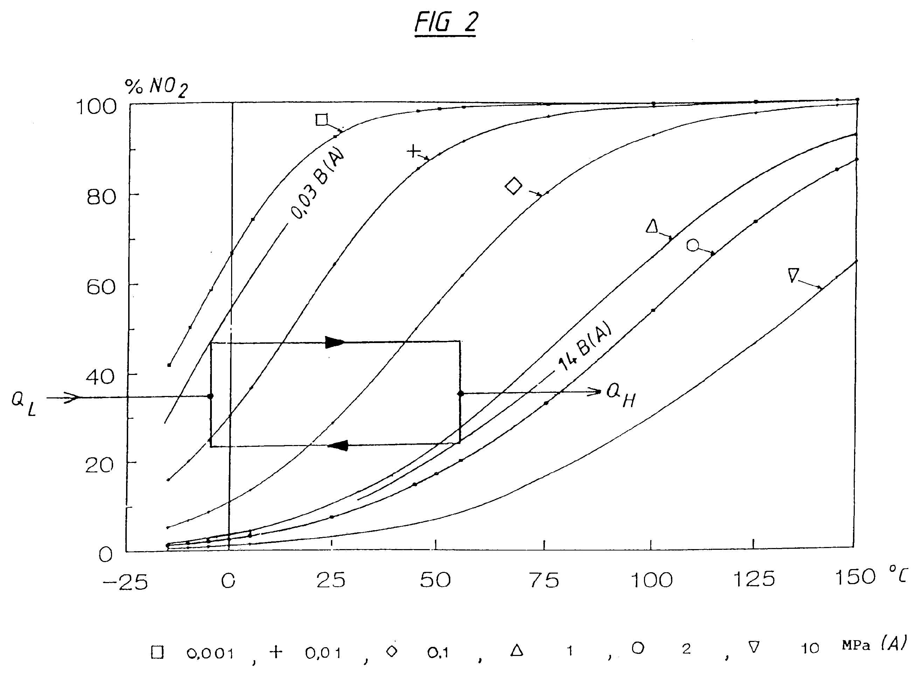

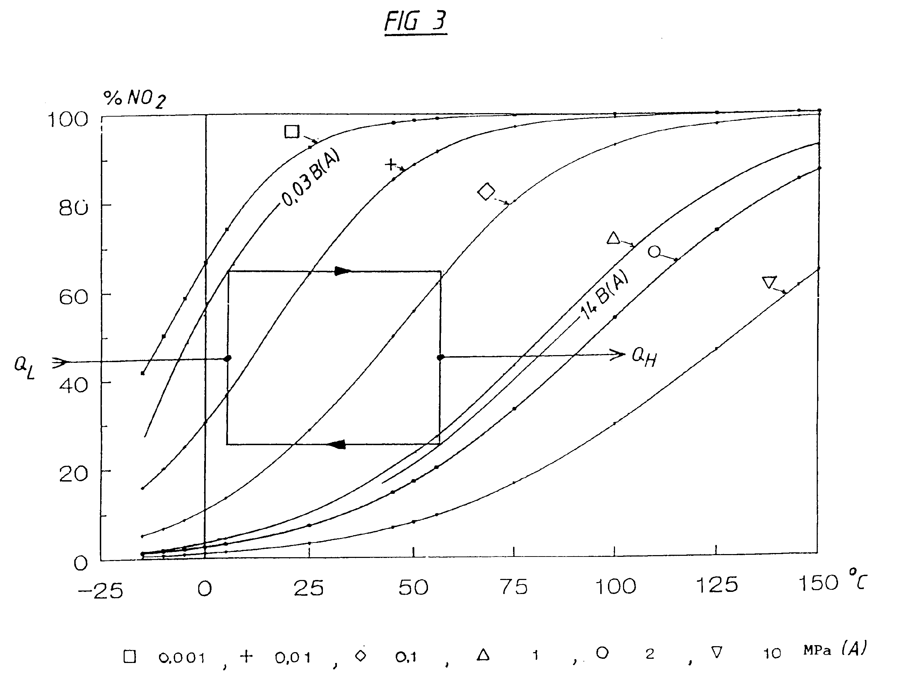

Fig. 2 shows the diagram of Fig. 1, excepted that a temperature difference in one step of 60 °C, at a 23 % chemical reaction band is shown.

Fig. 3 shows the diagram of Fig. 1, but now with a temperature difference in one step of 50 °C at a 40 % chemical reaction band.

Fig. 4 shows the diagram of Fig. 1, now having a temperature difference in one step of 25 °C at a 70 % chemical reaction band.

Fig. 5 is a plot showing the relation between temperature caused by an exothermic reaction and the coefficient of performance (C.O.P.).

Fig. 6 is a schematic drawing of the chemical heat pump system of the present invention.

Fig. 6a is the same schematic drawing of the chemical heat pump system of Fig. 6 with an extra preheating coil and electrical heater.

The reversible dissociation reaction utilized in the present invention involves a monomolecular dissociation reaction which produces a gaseous product. Such a dissociation reaction is an endothermic reaction. In the present invention the endothermic reaction is carried out in the endothermic reactor tank and it is essential to use this reaction to transport the heat energy from the lower heat source. The gaseous product of the dissociation reaction should then be regenerated to the initial reactant under certain reaction conditions. This regenerating reaction in the present invention is preferably an association reaction in the gaseous phase. This association reaction is generally the exothermic reaction. In the present invention, it is preferable that said association reaction and the before mentioned dissociation reaction are completely reversible, so that no side reactions are taking place, withdrawing reactants from the reversible reaction system. Therefore, although there are many reaction systems in which a dissociation reaction and an association reaction are involved, however the preferable reaction systems in the present invention are perfectly reversible dissociation-association reactions, reacting almost instantaneously. Some of these reaction systems are reactions utilizing nitrogen compounds and sulfur compounds or iodo compounds. Concrete examples of the reaction systems are as follows: 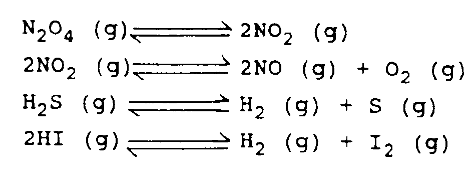
Temperatures of the lower grade heat source and the higher grade heat source of the chemical heat pump system are determined by the absorbed heat quantity and the temperature of the exothermic reaction. Therefore, in the present invention it is possible to select the reaction and catalyst, if necessary, corresponding to the temperature of the lower grade heat source and the desired temperature of the higher grade heat source. In the above shown reactions all compounds exist in the gaseous state. An outline of the principle of the chemical heat pump system used in the present invention has been described herewith, the exemple being the case, where the dinitrogen tetroxide-nitrogen dioxide system is utilized.

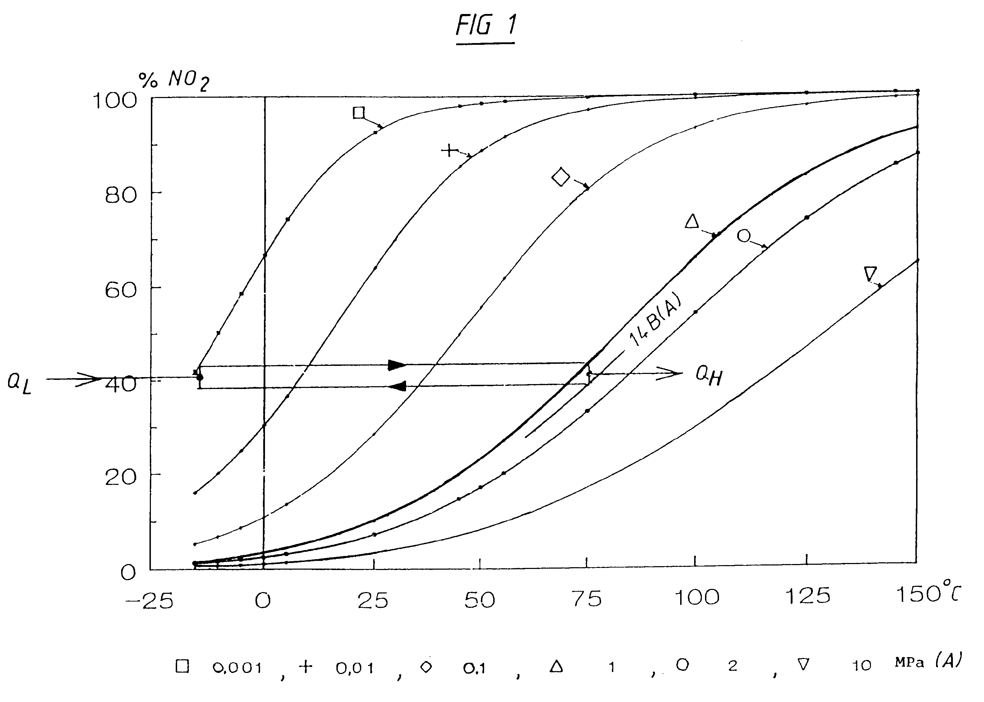

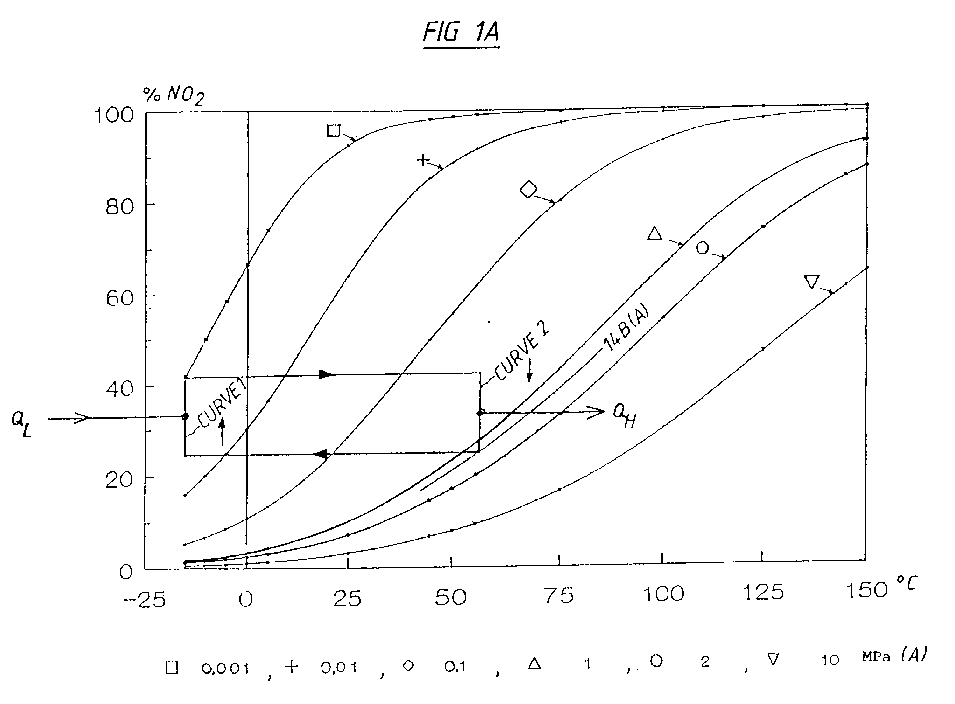

Fig. 1a shows the graph of the equilibrium composition of the reaction mixture, having pressure as a parameter, as a function of reaction temperature in the case of te N₂O₄/NO₂ system. The curve 1 in Fig. la shows that the endothermic reaction in the gaseous phase starts under the reduced pressure of 1 kPa, the composition of the reaction system being 24 % NO₂ at -15 °C. The endothermic dissociation reaction of the dinitrogen tetroxide takes place and the composition of the gaseous reaction mixture becomes 42 % NO₂. Curve 2 shows that when carrying out the gaseous phase reaction under a pressure of 1,4 MPa, wherein said composition of the reaction system is 42 % NO₂, the exothermic reaction of the dimerization of nitrogen dioxide proceeds and the composition becomes 24 % of NO₂.

Repeating the cycles of the processes of curve 1 and curve 2 alternately, it is possible to raise the temperature from -15 °C to +56 °C and recover this energy, but mechanical work in which the pressure increases from 1,0 kPa to 1,4 MPa is necessary to realize the above mentioned cycle; due to the heat loss of the compressor (at compressor efficiency of 80 %), the end temperature of the said reaction increases with approx. 15 °C to 71 °C. It can be seen in Fig. 1 that by said repeating of cycles, a temperature of 75 °C is attainable, meaning that the end temperature increases up to 90 °C (due-to the heat loss of the compressor).

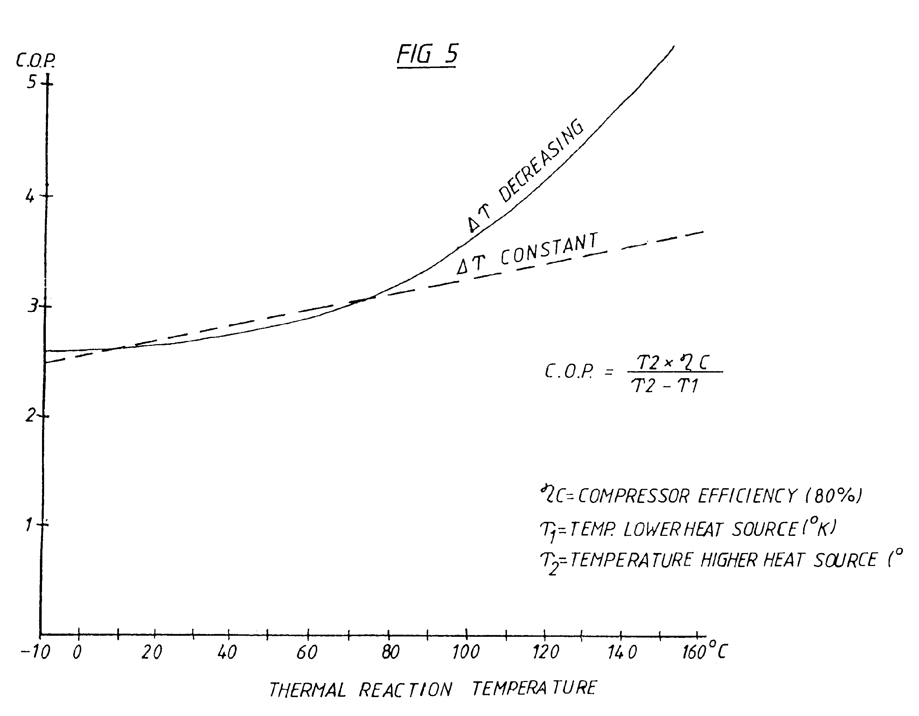

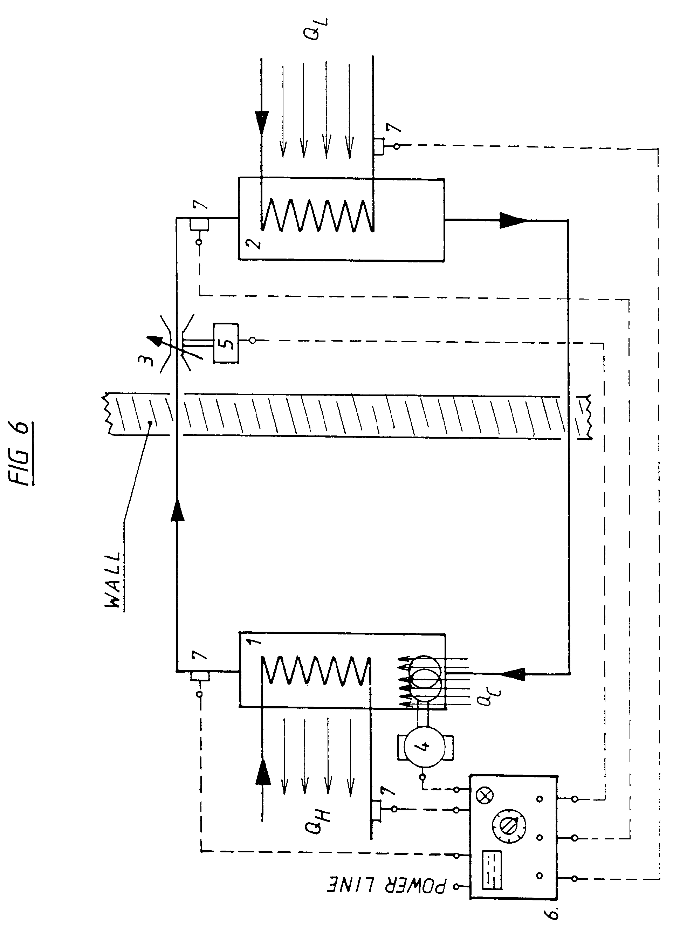

In general it can be said that the maximum temperature raised in one step at a maximum temperature of 55 °C (+15 °C increase, due to compressor heat), being 70 °C, can be achieved, showing a C.O.P. of 2,9 (see Fig. 5, at 55 °C).

According to the drawings, the details of the present invention will be described hereafter, using the N₂O₄/NO₂ system as an example.

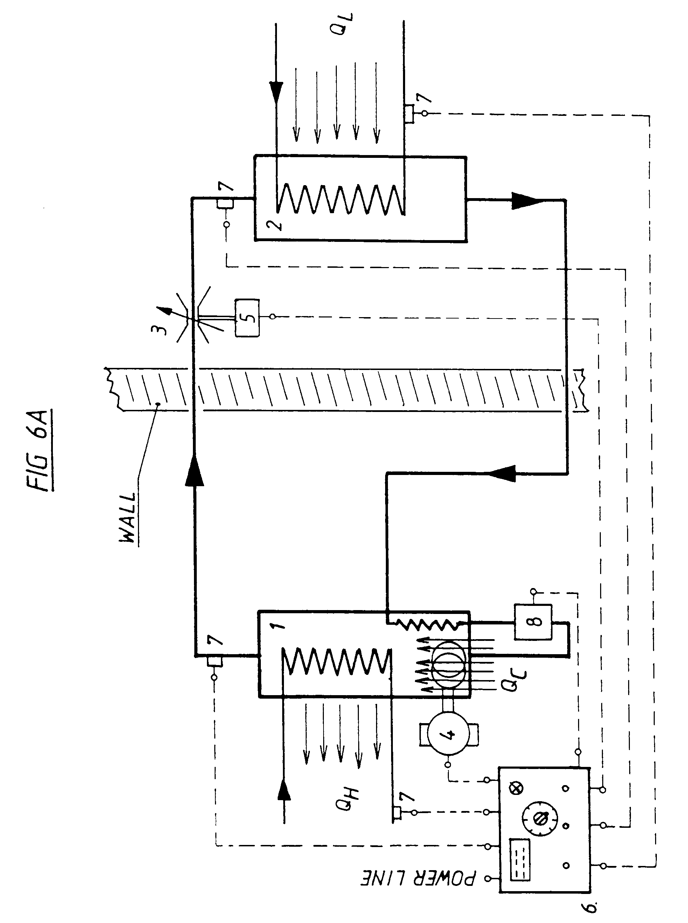

Fig. 6 is a schematic drawing of the chemical heat pump system of the present invention, comprising an endothermic reactor/heat exchanger 2, an exothermic reactor/heat exchanger 1, an expansion valve 3 a compressor 4, a control unit 5 for adjusting the restriction rate of the expansion valve, a computer controlled regulating device 6 and temperature sensors 7.

In Fig. 6 the endothermic reactor tank 2 (at the same time heat exchanger), absorbs heat Q_{low} from outside of the system as the next dissociation reaction proceeds: $\text{N2O₄ (g)→2 NO₂ (G)}$
On the other hand, in the exothermic reactor tank 1 (at the same time heat exchanger) a dimerization reaction takes place.

The heat Q_{high} generated in the exothermic dimerization reaction is here taken out of the system: $\text{2 NO₂ (g)→N₂O₄ (g)}$
Namely, as is known, at the above mentioned reaction conditions of temperature and reduced pressure the dissociation of dinitrogen tetroxide proceeds and nitrogen dioxide is produced.

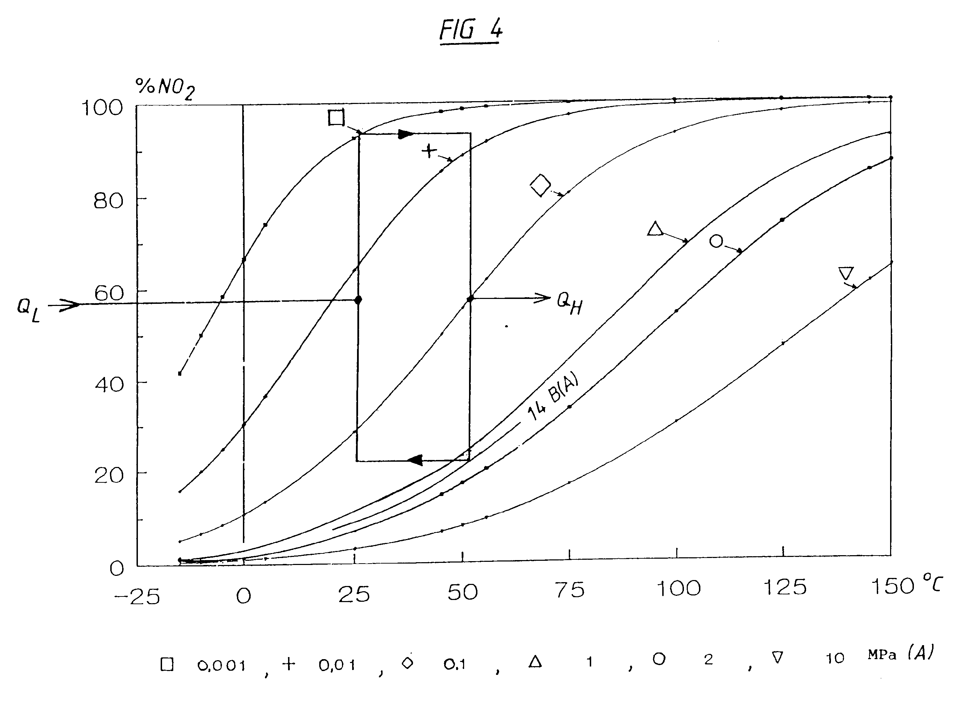

In this endothermic reaction, the reaction system absorbs heat Q_{low} from the outside lower grade heat source. It is possible to obtain 94 % NO₂ with this system (see Fig. 4). A mixture of NO₂ and N₂O₄ formed by the dissociation reaction, passes through a heat exchanger 2, which is the endothermic reactor tank at the same time and is compressed by the compressor 4, then introduced into the exothermic reactor tank 1. The high pressure gas fed into the exothermic reactor tank causes the exothermic reaction, namely the dimerization of nitrogen dioxide, then gives off heat energy Q_{high}. This reaction for example reaches to 70 % of completion, with respect to NO₂ when the reaction temperature is 70 °C at a pressure of 2 MPa ((pressure drop can be controlled by unit (5) as to regulate the desired temperature or heating/ refrigerating capacity)).

The temperature measuring devices 7 are used for controlling the system. In this cycle the system not only absorbs heat value Q_{low} from the lower grade heat source existing outside the system, but also gets the heat value O_{c} of the compressor, then giving off the heat value Q_{high} to the outside of the system. If the chemical heat pump system has to cover desired final temperatures exceeding 72 °C (and/or pressure higher than 0,6 MPa), a preheating system is needed (see Fig. 6a) for the gas entering the compressor 4, to avoid liquifying of the gas during compression cycle.

Therefore the gaseous reactant will be preheated by use of an extra heat exchanger located (also) in the exothermic reactor tank and will further be heated up to the desired overtemperature by means of an electrical/thermal heater 8. It is well known that the energy lost by expansion can be recovered for instance by using an expansion tubine. But for reason of simplicity and the fact that the purchase price of a heat pump system should be earned back in a short time, rather than having a slightly higer C.O.P. by means of an expensive system which is economically not interesting, this is not preferred.

Generally the C.O.P. of a chemical heat pump system is expressed as:$\text{C.O.P. =} \frac{\text{heat power}}{\text{input workload}} \text{=} \frac{{\text{Q}}_{\text{high}}}{{\text{W}}_{\text{c}}}$
Therefore, the efficiency of the heat pump system becomes larger when the input workload becomes smaller. It is easy to understand that the system of the present invention cannot only utilize the reversible reaction system of N₂O₄/NO₂ and NO₂/NO+O₂, but also it can utilize other reversible dissociation/association reactions.
The C.O.P. can be also calculated as follows:$\text{C.O.P. =} \frac{{\text{T₂xE}}_{\text{c}}}{\text{T₂-T₁}}$
where E_{c} represents efficiency (see for further information Fig. 5).

The best compression ratio should be selected in the present invention so that the C.O.P. should not be lowered, considering the conversion in the exothermic reaction, since the power to operate the compressor increases when the pressure in the exothermic reaction tank increases.

In the present invention the said chemical reactant is very attractive from a view point of economical costs. For example, in an experimental set-up of the present invention shown in Fig. 6, utilizing N₂O₄ as the gas to be dissociated, the compressor(s) were running with a load of in total 3,9 kW, achieving a pressure of 1,3 MPa and a vacuum of 3 kPa. The electrical heater (8) has a power consumption of 0,6 kW. The heat value of Q_{high} was 12,8 kW and Q_{low} was 8,3 kW at 5 °C.

A raise of temperature in one step of 50 °C and a C.O.P. of 2,8 (see Fig. 3 and Fig. 5) has been realised in practice. Caused by the mechanical heat given off by the compressor (and the electrical preheater), the final temperature rose to 67 °C. So the C.O.P. in the practice was nearly equal to 3.

## Claims

1. A closed chemical heat pump system based on a reversible chemical association/dissociation reaction of the type A + B 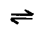 C + heat, A and B being different or equal, and A, B and C all being gases, said system comprising a first or exothermic reaction vessel (1) and a second or endothermic reaction vessel (2), a first duct connecting the outflow end of the first vessel (1) with the inflow end of the second vessel (2), and a second duct connecting the outflow end of the second vessel (2) with the inflow end of the first vessel (1), a compression pump (4) included in the second duct, and a pressure reducing means (3) included in the first duct, said vessels (1) and (2) being heat exchangers interacting with heat input and output means (Q_{H}, Q_{L}) of higher and lower temperatures respectively **characteri****zed** in that the pressure reducing means (3) is a controllable expansion valve arranged at the inflow end of the second vessel (2), temperature sensors (7) being provided in the second duct before and after the valve (3) and the heat input and output means (Q_{H}, Q_{L}), which sensors are connected to a control apparatus (6) used for controlling an actuating element (5) of said valve (3) so as to control this valve (3) in function of the desired temperatures in the vessels (1,2).

2. The system of claim 1, **characterized** in that the compression pump (4) is arranged inside the first vessel (1) at its inflow end.

3. The system of claim 1 or 2, **characterized** in that an additional heat exchanger is included in the second duct before the compression pump (4), and is arranged inside the first vessel (1) interacting with the gas mixture in this vessel (1).

4. The system of any of claims 1 to 3, **characterized** in that an additional heating means (8) controlled by the control apparatus (6) is included in the second duct at the inflow end of the compression pump (4).

5. The system of any of claims 1 to 4, **characterized** in that the control means (6) is moreover adapted to control the desired temperatures in the vessels (1, 2) in function of the variation of the electric current consumed by the compression pump (4).

6. The system of any of claims 1 to 5, **characterized** in that the reactions used therein are:

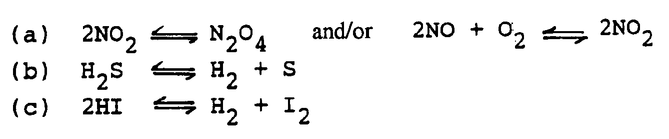

## Patentansprüche

1. Geschlossenes chemisches Wärmepumpensystem, beruhend auf einer reversiblen chemischen Assoziations/Dissoziations-Reaktion des Typs A + B 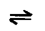 C + Wärme, wobei A und B unterschiedlich oder gleich sein können und A, B und C Gase sind, wobei das besagte System ein erstes oder exothermes Reaktionsgefäß (1) und ein zweites oder endothermes Reaktionsgefäß (2), eine erste, das Austrittsende des ersten Gefäßes (1) mit dem Eintrittsende des zweiten Gefäßes (2) verbindende Leitung sowie eine zweite, das Austrittsende des zweiten Gefäßes (2) mit dem Eintrittsende des ersten Gefäßes (1) verbindende Leitung, eine Kompressionspumpe (4) in der zweiten Leitung sowie ein Druckreduziermittel (3) in der ersten Leitung aufweist, wobei die besagten Gefäße (1) und (2) mit Wärmeeingangs- und -ausgangsmitteln (Q_{H}, Q_{L}) von höherer bzw. niedrigerer Temperatur wechselwirkende Wärmetauscher sind,
dadurch gekennzeichnet, daß das Druckreduziermittel (3) ein steuerbares Entspannungsventil am Eintrittsende des zweiten Gefäßes (2) ist, wobei Temperatursensoren (7) in der zweiten Leitung vor und hinter dem Ventil (3) und in den Wärmeeingangs- und -ausgangsmitteln (Q_{H}, Q_{L}) vorgesehen und mit einer Steuereinrichtung (6) zum Steuern eines Betätigungselementes (5) des besagten Ventils (3) verbunden sind, so daß dieses Ventil (3) als Funktion der gewünschten Temperaturen in den Gefäßen (1, 2) gesteuert wird.

2. System nach Anspruch 1,
dadurch gekennzeichnet, daß die Kompressionspumpe (4) innerhalb des ersten Gefäßes (1) an dessen Eintrittsende angeordnet ist.

3. System nach Anspruch 1 oder 2,
dadurch gekennzeichnet, daß ein zusätzlicher Wärmetauscher in der zweiten Leitung vor der Kompressionspumpe (4) und innerhalb des ersten Gefäßes (1) zur Wechselwirkung mit der Gasmischung in diesem Gefäß (1) angeordnet ist.

4. System nach einem der Ansprüche 1 bis 3,
dadurch gekennzeichnet, daß ein zusätzliches, von der Steuereinrichtung (6) gesteuertes Heizmittel (8) in der zweiten Leitung am Eintrittsende der Kompressionspumpe (4) angeordnet ist.

5. System nach einem der Ansprüche 1 bis 4,
dadurch gekennzeichnet, daß das Steuermittel (6) weiterhin zur Steuerung der gewünschten Temperaturen in den Gefäßen (1, 2) als Funktion der Änderung des von der Kompressionspumpe (4) verbrauchten elektrischen Stroms ausgebildet ist.

6. System nach einem der Ansprüche 1 bis 5,
dadurch gekennzeichnet, daß die hier benutzten Reaktionen sind:

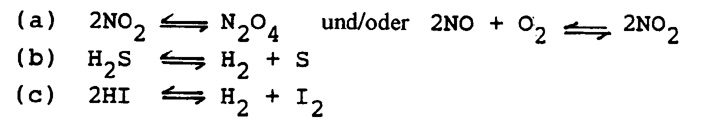

## Revendications

1. Système fermé de pompe à chaleur chimique basé sur une réaction d'association / dissociation chimique réversible du type A + B 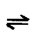 C + chaleur, A et B étant différents ou égaux, et A, B et C étant tous des gaz, ledit système comprenant une première cuve de réacteur exothermique (1) et une deuxième cuve de réacteur endothermique (2), un premier conduit reliant l'extrémité de sortie de la première cuve (1) à l'extrémité d'entrée de la deuxième cuve (2) et un deuxième conduit reliant l'extrémité de sortie de la deuxième cuve (2) à l'extrémité d'entrée de la première cuve (1), une pompe de compression (4) placée dans le deuxième conduit et un moyen de réduction de pression (3) placé dans le premier conduit, lesdites cuves (1) et (2) étant des échangeurs de chaleur associés à des moyens d'entrée et de sortie de chaleur (Q_{H}, Q_{L}) ayant des températures supérieure et inférieure respectivement, caractérisé en ce que le moyen de réduction de pression (3) est une vanne de détente réglable placée à l'extrémité d'entrée de la deuxième cuve (2), des capteurs de température (7) étant prévus dans le deuxième conduit avant et après la vanne (3) et dans les moyens d'entrée et de sortie de chaleur (Q_{H}, Q_{L}), ces capteurs étant connectés à un appareil de commande (6) servant à commander un élément de manoeuvre (5) de ladite vanne (3) de façon à commander cette vanne (3) en fonction des températures désirées dans les cuves de réaction (1,2).

2. Système suivant la revendication 1, caractérisé en ce que la pompe de compression (4) est placée à l'intérieur de la première cuve de réaction (1), à l'extrémité d'entrée de celle-ci.

3. Système suivant la revendication 1 ou 2, caractérisé en ce qu'un échangeur de chaleur additionnel est inclus dans le deuxième conduit, avant la pompe de compression (4), et il est agencé, à l'intérieur de la première cuve (1), en interaction avec le mélange gazeux dans cette cuve (1).

4. Système suivant une quelconque des revendications 1 à 3, caractérisé en ce qu'un moyen de chauffage supplémentaire (8), commandé par l'appareil de commande (6), est inclus dans le deuxième conduit, à l'extrémité d'entrée de la pompe de compression (4).

5. Système suivant une quelconque des revendications 1 à 4, caractérisé en ce que les moyens de commande (6) sont en outre prévus pour commander les températures désirées dans les cuves (1,2) en fonction de la variation du courant électrique consommé par la pompe de compression (4).

6. Système suivant une quelconque des revendications 1 à 5, caractérisé en ce que les réactions utilisées dans ledit système sont :
